# EUROPÄISCHE PATENTSCHRIFT

(11) **EP 3 463 999 B1**
(45) Veröffentlichungstag und Bekanntmachung des Hinweises auf die Patenterteilung: **24.06.2020**
(21) Anmeldenummer: 17713630.6
(22) Anmeldetag: 24.03.2017
(51) Int. Cl.: B60T 13/74

(54) **VERFAHREN ZUM ÜBERWACHEN DER BREMSKRAFT IN EINEM FAHRZEUG**
METHOD FOR MONITORING THE BRAKING FORCE IN A VEHICLE
PROCÉDÉ POUR SURVEILLER LA FORCE DE FREINAGE DANS UN VÉHICULE

(30) Priorität: 24.05.2016 DE 102016209042
(43) Veröffentlichungstag der Anmeldung: 10.04.2019
(73) Patentinhaber: Robert Bosch GmbH, 70442 Stuttgart (DE)
(72) Erfinder: ENGLERT, Andreas, 74199 Untergruppenbach (DE); PUTZER, Tobias, 74177 Bad Friedrichshall (DE)
(86) Internationale Anmeldenummer: PCT/EP2017/057076
(87) Internationale Veröffentlichungsnummer: WO 2017/202526

(56) Entgegenhaltungen:
- DE-A1-102012 202 959
- DE-A1-102012 205 576
- DE-A1-102012 213 289

## Beschreibung

Die Erfindung bezieht sich auf ein Verfahren zum Überwachen der Bremskraft in einem Fahrzeug, dessen Bremssystem eine hydraulische Fahrzeugbremse und mindestens eine elektromechanische Bremsvorrichtung mit einem elektrischen Bremsmotor umfasst.

### Stand der Technik

In der DE 10 2004 004 992 A1 wird ein Bremssystem für ein Fahrzeug beschrieben, das eine hydraulische Fahrzeugbremse zum Erzeugen von Bremskraft im regulären Bremsbetrieb und außerdem eine elektromechanische Bremsvorrichtung mit einem elektrischen Bremsmotor zum Erzeugen von Klemmkraft im Fahrzeugstillstand umfasst. Der elektrische Bremsmotor wirkt hierbei auf den gleichen Bremskolben wie die hydraulische Fahrzeugbremse und verstellt diesen gegen eine Bremsscheibe.

Aus der DE 10 2010 040 573 A1 ist es darüber hinaus bekannt, im Falle einer elektromechanischen Feststellbremse, die von der hydraulischen Fahrzeugbremse unterstützt wird, einen Fehler in der Hydraulik zu erkennen, falls eine motorische Kenngröße des elektrischen Bremsmotors außerhalb eines zulässigen Wertebereichs liegt.

Die DE 10 2012 213 289 A1 offenbart ein Verfahren zum Bereitstellen der von einer Feststellbremse in einem Fahrzeug erzeugten Klemmkraft, die zumindest teilweise von einer elektromechanischen Bremsvorrichtung mit einem elektrischen Bremsmotor erzeugt wird. Der elektrische Bremsmotor beaufschlagt einen Bremskolben einer hydraulischen Fahrzeugbremse, die beim regulären Bremsbetrieb einen hydraulischen Druck auf den Bremskolben ausübt, um eine gewünschte Bremskraft zu erzeugen. Die elektromechanische Klemmkraft wird aus aktuellen Messwerten des Motorstroms des elektrischen Bremsmotors ermittelt, wobei zur Identifikation von Messfehlern überprüft wird, ob ein oder mehrere Strommesswerte außerhalb zulässiger Grenzen liegen. Hierbei kann auch der Gradient der Strommesswertfunktion darauf überprüft werden, ob der Gradient innerhalb definierter Grenzen liegt.

Die DE 10 2012 202 959 A1 offenbart die Betätigung einer elektromechanischen Bremsvorrichtung und einer hydraulischen Bremsvorrichtung während eines Nachspannvorganges, bei dem der elektrische Bremsmotor der elektromechanischen Bremsvorrichtung im Anschluss an einen ersten Zuspannvorgang nochmals betätigt wird. Es wird ein nicht ausreichender Hydraulikdruck erkannt, wenn der Gradient des Motorstroms des elektrischen Bremsmotors während des Nachspannvorganges einen zugeordneten Grenzwert unterschreitet.

### Offenbarung der Erfindung

Das erfindungsgemäße Verfahren bezieht sich auf ein Fahrzeug mit einem Bremssystem, das eine hydraulische Fahrzeugbremse und mindestens eine elektromechanische Bremsvorrichtung mit einem elektrischen Bremsmotor umfasst. Im regulären Bremsbetrieb wird das Fahrzeug über eine Betätigung der hydraulischen Fahrzeugbremse abgebremst. Die elektromechanische Bremsvorrichtung wird vorteilhafterweise zum Festsetzen des Fahrzeugs im Stillstand verwendet, indem der elektrische Bremsmotor betätigt wird und auf elektromechanischem Wege eine das Fahrzeug festsetzende Klemmkraft erzeugt wird.

Die elektromechanische Bremsvorrichtung ist in eine Radbremseinrichtung der hydraulischen Fahrzeugbremse integriert, der Bremskolben kann sowohl von dem hydraulischen Bremsfluid als auch gleichzeitig oder unabhängig voneinander von dem Bremsmotor in Richtung auf die Bremsscheibe verstellt werden. Gegebenenfalls wird die elektromechanische Bremsvorrichtung mit dem Bremsmotor auch bei fahrendem Fahrzeug zur Reduzierung der Fahrzeuggeschwindigkeit eingesetzt.

Dem Verfahren liegt die Bremssituation zugrunde, dass zeitgleich sowohl die hydraulische Fahrzeugbremse als auch die elektromechanische Bremsvorrichtung mit dem Bremsmotor betätigt werden, um Bremskraft zu erzeugen. Dementsprechend wirken ein hydraulischer Bremsdruck und der elektrische Bremsmotor zeitgleich auf den gleichen Bremskolben in der Radbremseinrichtung und verstellen diesen in Richtung auf eine Bremsscheibe.

Der hydraulische Bremsdruck wird in dem Bremskreis, in welchem sich die Radbremseinrichtung befindet, mithilfe eines Drucksensors ermittelt. Hierbei wird der hydraulische Bremsdruck benachbart zu einem Hauptbremszylinder der hydraulischen Fahrzeugbremse sensiert, was jedoch den Nachteil hat, dass im Falle einer Hydraulikleitung mit reduziertem oder blockiertem Strömungsquerschnitt, beispielsweise bei geknickter oder gequetschter Hydraulikleitung, benachbart zum Hauptbremszylinder ein Soll-Bremsdruck ermittelt wird, der jedoch nicht an der Radbremseinrichtung anliegt, die drucklos bleibt. In diesem Fall kann die Fehlfunktion nicht sensorisch ermittelt werden, so dass die hydraulische Druckunterstützung an der Radbremseinrichtung wegfällt und bei gleichzeitiger Betätigung der elektromechanischen Bremsvorrichtung nur die elektromechanische Bremskraft des Bremsmotors wirksam ist. Im Falle einer Verwendung als Parkbremse kann jedoch das Problem auftreten, dass die elektromechanische Bremskraft ohne Unterstützung der hydraulischen Bremskraft für ein sicheres Halten des Fahrzeugs im Stillstand, insbesondere am Hang, nicht ausreicht.

Mithilfe des erfindungsgemäßen Verfahrens können Fehlfunktionen festgestellt werden, die auf einen zu niedrigen und damit unzureichend hohen hydraulischen Bremsdruck in der hydraulischen Fahrzeugbremse zurückgehen. Hierfür wird beim Zuspannen des elektrischen Bremsmotors und dem damit einhergehenden Bremskraftaufbau der Anstieg der Bremskraft oder eine hiermit korrespondierende Größe auf Unter- oder Überschreiten eines zulässigen Wertebereichs untersucht. Nur falls der elektromechanische Bremskraftanstieg innerhalb des zulässigen Wertebereichs liegt, kann von einem ordnungsgemäßen hydraulischen Bremsdruck ausgegangen werden, der von der hydraulischen Fahrzeugbremse erzeugt wird. Liegt dagegen der elektromechanische Bremskraftanstieg bzw. die hiermit korrespondierende Größe außerhalb des zulässigen Wertebereichs, muss von einer Fehlfunktion ausgegangen werden, woraufhin ein entsprechendes Fehlersignal erzeugt wird.

Bei dem erfindungsgemäßen Verfahren wird der Gradient des elektromechanischen Bremskraftanstiegs bzw. der korrespondierenden Größe mit einem Referenzwert verglichen. Der elektromechanische Bremskraftanstieg erfolgt, wenn der elektrische Bremsmotor in Kontakt mit dem Bremskolben gelangt und diesen gegen die Bremsscheibe drückt. Im weiteren Verlauf steigt die elektromechanische Bremskraft linear oder zumindest annähernd linear an. Dieser Anstieg der elektromechanischen Bremskraft besitzt einen Gradienten, der mit dem zugeordneten Referenzwert verglichen wird; der Referenzwert markiert die Grenze des zulässigen Wertebereichs, gegebenenfalls unter Berücksichtigung eines zulässigen Toleranzbereiches, wobei ein Fehler in der hydraulischen Fahrzeugbremse vorliegt, wenn der Gradient des elektromechanischen Bremskraftanstiegs außerhalb des Referenzwerts unter Berücksichtigung des Toleranzwertes liegt. Über den Gradienten des elektromechanischen Bremskraftanstiegs kann zuverlässig beurteilt werden, ob ein ausreichend hoher hydraulischer Bremsdruck anliegt oder eine unzulässige Abweichung vorliegt. Im Falle eines Fehlers - bei zu niedrigem hydraulischem Bremsdruck - ist der Gradient des elektromechanischen Bremskraftanstiegs kleiner als bei korrekt funktionierender hydraulischer Fahrzeugbremse. Diese Abweichung kann ermittelt werden und führt gegebenenfalls zu einem Fehlersignal. Diese Vorgehensweise hat den Vorteil, dass der hydraulische Bremsdruck in der Radbremseinrichtung nicht sensiert zu werden braucht und dennoch eine Fehlfunktion festgestellt werden kann.

Gemäß einer vorteilhaften Ausführung wird als mit dem elektromechanischen Bremskraftanstieg korrespondierende Größe der Motorstrom des elektrischen Bremsmotors ermittelt und der Beurteilung, ob eine Fehlfunktion in der hydraulischen Fahrzeugbremse vorliegt, zugrunde gelegt. Der Motorstrom des elektrischen Bremsmotors und die elektromechanische Bremskraft verlaufen synchron, so dass der Motorstrom der Beurteilung des Bremskraftanstiegs zugrunde gelegt werden kann. Alternativ ist es auch möglich, die elektromechanische Bremskraft anderweitig zu ermitteln, beispielsweise die Bremskraft zu sensieren, zum Beispiel anhand der Verschiebung des Bremssattels, oder die Bremssattelsteifigkeit zu ermitteln, und der Beurteilung einer möglichen Fehlfunktion der hydraulischen Fahrzeugbremse zugrunde zu legen.

Gemäß einer vorteilhaften Ausführung wird der Gradient des elektromechanischen Bremskraftanstiegs aus den Anfangs- und Endpunkten des Anstiegsabschnittes gebildet. Während des Zuspannvorgangs durchläuft der elektrische Bremsmotor eine Leerlaufphase ohne Bremskraftanstieg. Mit dem Kontakt zwischen Bremsmotor und Bremskolben bzw. zwischen Bremskolben und Bremsscheibe beginnt der elektromechanische Bremskraftanstieg; der Anfangspunkt des Anstiegs kann beispielsweise anhand des Anstiegs des Motorstroms ermittelt werden. Mit dem Erreichen der elektromechanischen Soll-Bremskraft wird der Bremsmotor abgeschaltet; im Abschaltzeitpunkt sinkt der Bremsstrom auf null, was ebenfalls detektiert werden kann. Somit liegen die Anfangs- und Endpunkte des elektromechanischen Bremskraftanstieges bzw. der korrespondierenden Größe fest und können der Gradientenermittlung zugrunde gelegt werden.

Alternativ ist es auch möglich, während des Kraftanstiegs eine Ausgleichsgerade für den Gradienten zu erzeugen und diese Ausgleichsgerade mit dem Referenzwert zu vergleichen.

Der zulässige Wertebereich kann empirisch bestimmt werden. Es ist beispielsweise möglich, vorab für die betreffende Radbremseinrichtung einen Testlauf oder mehrere Testläufe durchzuführen und als Referenzwerte abzulegen, die den zulässigen Wertebereich bestimmen.

Es ist aber auch möglich, den zulässigen Wertebereich bzw. den entsprechenden Referenzwert aus der Steifigkeit des Bremssattels der Radbremseinrichtung zu bestimmen, die von verschiedenen Parametern bzw. Kenngrößen abhängt, beispielsweise der Belagstärke, der Temperatur und einem eventuell anliegenden hydraulischen Vordruck.

Gegebenenfalls wird bei jedem Zuspannvorgang die Steifigkeit des Bremssattels ermittelt, wobei vorteilhafterweise der aktuell verwendete Wert der Bremssattelsteifigkeit als gemittelter Wert von zumindest zwei zu unterschiedlichen Zeitpunkten bestimmten Bremssattelsteifigkeiten berechnet wird, beispielsweise aus dem aktuellen Zeitschritt und dem vorangegangenen Zeitschritt, jeweils bezogen auf einen Zuspannvorgang.

Gemäß einer weiteren vorteilhaften Ausführung handelt es sich bei der Größe, die mit dem Gradienten des elektromechanischen Bremskraftanstieges korrespondiert, um die Steifigkeit des Bremssattels der Radbremseinrichtung. Die Bremssattelsteifigkeit kann als Funktion verschiedener Parameter und Kenngrößen bzw. Zustandsgrößen ermittelt werden, beispielsweise in Abhängigkeit der Temperatur, der Belagstärke des Bremsbelags und des hydraulischen Bremsdrucks. Die Bremssattelsteifigkeit kann für jeden Zuspannvorgang aktuell ermittelt werden, wobei ein zu niedriger hydraulischer Bremsdruck für den Fall vorliegt, dass sich die Bremssattelsteifigkeit um einen unzulässig hohen Wert ändert. Ebenso liegt ein Fehler in der hydraulischen Fahrzeugbremse vor, wenn die Bremssattelsteifigkeiten zwischen den verschiedenen Radbremseinrichtungen in einer unzulässig hohen Weise voneinander abweichen.

Der elektromechanische Bremskraftanstieg wird in zwei unterschiedlichen Radbremseinrichtungen verglichen. Hierbei werden insbesondere die Bremskraftanstiege in den beiden Radbremseinrichtungen an einer gemeinsamen Achse, vorzugsweise an der Hinterachse des Fahrzeuges miteinander verglichen. Ergeben sich in den Bremskraftanstiegen der beiden Radbremseinrichtungen signifikante Unterschiede, deutet dies auf einen hydraulischen Fehler in der Radbremseinrichtung mit dem geringeren Gradienten des Bremskraftanstieges hin.

Gemäß einer weiteren zweckmäßigen Ausführung wird der hydraulische Bremsdruck zeitlich vor dem elektromechanischen Bremskraftanstieg erzeugt. Diese Vorgehensweise stellt sicher, dass der Bremssattel zunächst mit dem hydraulischen Bremsdruck belastet wird und sich unter der Wirkung des hydraulischen Bremsdrucks elastisch verformt. Anschließend erfolgt der elektromechanische Bremskraftaufbau und entsprechend die zusätzliche Belastung des Bremssattels.

Die Verfahrensschritte laufen in einem Regel- bzw. Steuergerät ab, in welchem Stellsignale zur Ansteuerung der verschiedenen Komponenten des Bremssystems mit der hydraulischen Fahrzeugbremse und der mindestens einen elektromechanischen Bremsvorrichtung erzeugt werden.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer hydraulischen Fahrzeugbremse, wobei die Radbremseinrichtung in der Fahrzeugbremse an der Fahrzeughinterachse zusätzlich jeweils eine elektromechanische Bremsvorrichtung mit einem elektrischen Bremsmotor aufweist,
- Fig. 2: einen Schnitt durch eine elektromechanische Bremsvorrichtung mit einem elektrischen Bremsmotor,
- Fig. 3: ein Schaubild mit dem zeitabhängigen Verlauf des Motorstroms des elektrischen Bremsmotors, des hydraulischen Bremsdrucks sowie der Gesamt-Bremskraft,
- Fig. 4: ein Schaubild mit dem elektromechanischen Bremskraftanstieg bei korrektem hydraulischem Bremsdruck und bei einer Fehlfunktion in der hydraulischen Fahrzeugbremse,
- Fig. 5: ein Ablaufschema für ein Verfahren zum Überwachen der Bremskraft in einer ersten Ausführungsvariante,
- Fig. 6: ein Ablaufschema zum Überwachen der Bremskraft in einer weiteren Ausführungsvariante.

In den Figuren sind gleiche Bauteile mit gleichen Bezugszeichen versehen.

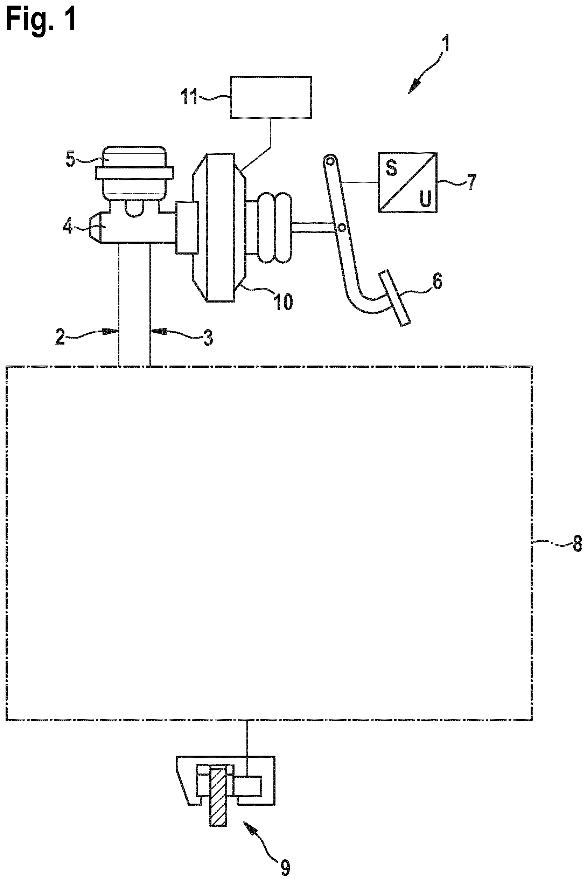

Die in Fig. 1 dargestellte hydraulische Fahrzeugbremse 1 für ein Fahrzeug umfasst einen Vorderachs-Bremskreis 2 und einen Hinterachs-Bremskreis 3 zur Versorgung und Ansteuerung von Radbremseinrichtungen 9 an jedem Rad des Fahrzeugs mit einem unter Hydraulikdruck stehenden Bremsfluid. Die beiden Bremskreise 2, 3 sind an einen gemeinsamen Hauptbremszylinder 4 angeschlossen, der über einen Bremsflüssigkeitsvorratsbehälter 5 mit Bremsfluid versorgt wird. Der Hauptbremszylinderkolben innerhalb des Hauptbremszylinders 4 wird vom Fahrer über das Bremspedal 6 betätigt, der vom Fahrer ausgeübte Pedalweg wird über einen Pedalwegsensor 7 gemessen.

Zwischen dem Bremspedal 6 und dem Hauptbremszylinder 4 befindet sich ein Bremskraftverstärker 10, der beispielsweise einen Pumpenmotor umfasst, welcher bevorzugt über ein Getriebe den Hauptbremszylinder 4 betätigt (iBooster). Der Bremskraftverstärker 10 bildet einen elektrisch steuerbaren Aktuator zur Beeinflussung des Bremsdrucks.

Die vom Pedalwegsensor 7 gemessene Stellbewegung des Bremspedals 6 wird als Sensorsignal an ein Regel- bzw. Steuergerät 11 übermittelt, in welchem Stellsignale zur Ansteuerung des Bremskraftverstärkers 10 erzeugt werden. Die Versorgung der Radbremseinrichtungen 9 mit Bremsfluid erfolgt in jedem Bremskreis 2, 3 über verschiedene Schaltventile, die gemeinsam mit weiteren Aggregaten Teil einer Bremshydraulik 8 sind. Zur Bremshydraulik 8 gehört des Weiteren eine Hydraulikpumpe, die Bestandteil eines elektronischen Stabilitätsprogramms (ESP) ist. Auch der Pumpenmotor der ESP-Hydraulikpumpe bildet einen elektrisch steuerbaren Aktuator zur Beeinflussung des Bremsdrucks.

Die Bremskraftverstärkung kann zusätzlich oder alternativ mithilfe eines elektrisch ansteuerbaren Aktuators durchgeführt werden, der dem Hauptbremszylinder 4 der Fahrzeugbremse 1 nachgeschaltet ist. Bei dem Aktuator wird die Verstärkung beispielsweise über einen Elektromotor bereitgestellt, der einen Plunger bewegt. Dieser ist dem Hauptbremszylinder nachgelagert und kann Bremsdruck in den beiden Bremskreisen erzeugen.

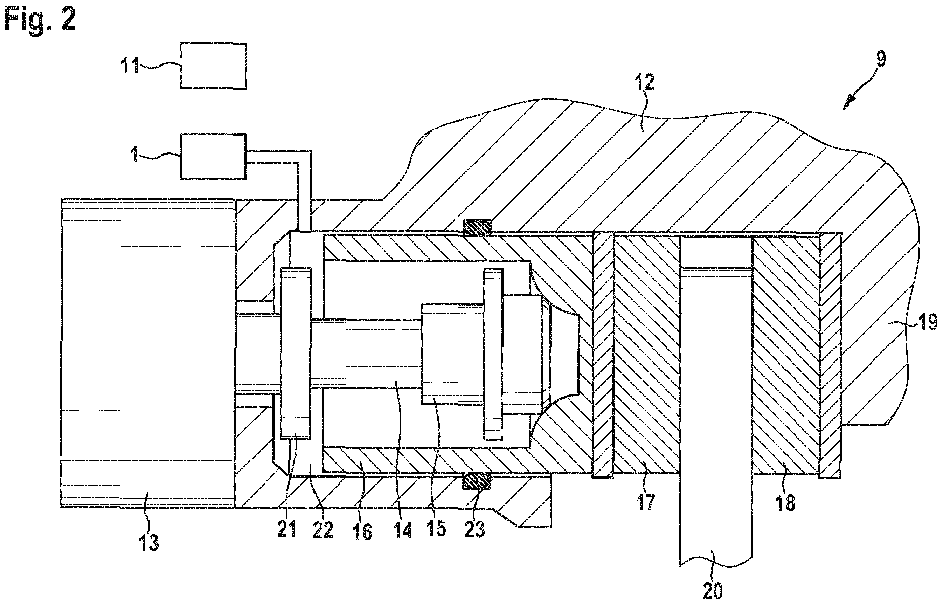

In Fig. 2 ist die Radbremseinrichtung 9, die an einem Rad an der Hinterachse des Fahrzeugs angeordnet ist, im Detail dargestellt. Die Radbremseinrichtung 9 ist Teil der hydraulischen Fahrzeugbremse 1 und wird aus dem Hinterachs-Bremskreis mit Bremsfluid 22 versorgt. Die Radbremseinrichtung 9 weist außerdem eine elektromechanische Bremsvorrichtung auf, die bevorzugt zum Festsetzen eines Fahrzeugs im Stillstand eingesetzt wird, jedoch auch bei einer Bewegung des Fahrzeugs, insbesondere bei kleineren Fahrzeuggeschwindigkeiten unterhalb eines Geschwindigkeits-Grenzwerts zum Abbremsen des Fahrzeugs eingesetzt werden kann.

Die elektromechanische Bremsvorrichtung umfasst einen Bremssattel 12 mit einer Zange 19, welche eine Bremsscheibe 20 übergreift. Als Stellglied weist die Bremsvorrichtung einen Gleichstrom-Elektromotor als Bremsmotor 13 auf, dessen Rotorwelle eine Spindel 14 rotierend antreibt, auf der eine Spindelmutter 15 drehbar gelagert ist. Bei einer Rotation der Spindel 14 wird die Spindelmutter 15 axial verstellt. Die Spindelmutter 15 bewegt sich innerhalb eines Bremskolbens 16, der Träger eines Bremsbelags 17 ist, welcher von dem Bremskolben 16 gegen die Bremsscheibe 20 gedrückt wird. Auf der gegenüberliegenden Seite der Bremsscheibe 20 befindet sich ein weiterer Bremsbelag 18, der ortsfest an der Zange 19 gehalten ist. Der Bremskolben 16 ist auf seiner Außenseite über einen umgreifenden Dichtring 23 strömungsdicht gegenüber dem aufnehmenden Gehäuse abgedichtet.

Innerhalb des Bremskolbens 16 kann sich die Spindelmutter 15 bei einer Drehbewegung der Spindel 14 axial nach vorne in Richtung auf die Bremsscheibe 20 zu bzw. bei einer entgegen gesetzten Drehbewegung der Spindel 14 axial nach hinten bis zum Erreichen eines Anschlags 21 bewegen. Zum Erzeugen einer Klemmkraft beaufschlagt die Spindelmutter 15 die innere Stirnseite des Bremskolbens 16, wodurch der axial verschieblich in der Bremsvorrichtung gelagerte Bremskolben 16 mit dem Bremsbelag 17 gegen die zugewandte Stirnfläche der Bremsscheibe 20 gedrückt wird.

Für die hydraulische Bremskraft wirkt auf den Bremskolben 16 der hydraulische Druck des Bremsfluids 22 aus der hydraulischen Fahrzeugbremse 1. Der hydraulische Druck kann auch im Fahrzeugstillstand bei Betätigung der elektromechanischen Bremsvorrichtung unterstützend wirksam sein, so dass sich die Gesamt-Bremskraft aus dem elektromotorisch gestellten Anteil und dem hydraulischen Anteil zusammensetzt. Während der Fahrt des Fahrzeugs ist entweder nur die hydraulische Fahrzeugbremse aktiv oder sowohl die hydraulische Fahrzeugbremse als auch die elektromechanische Bremsvorrichtung oder nur die elektromechanische Bremsvorrichtung, um Bremskraft zu erzeugen. Die Stellsignale zur Ansteuerung sowohl der einstellbaren Komponenten der hydraulischen Fahrzeugbremse 1 als auch der elektromechanischen Radbremseinrichtung 9 werden in dem Regel- bzw. Steuergerät 11 erzeugt.

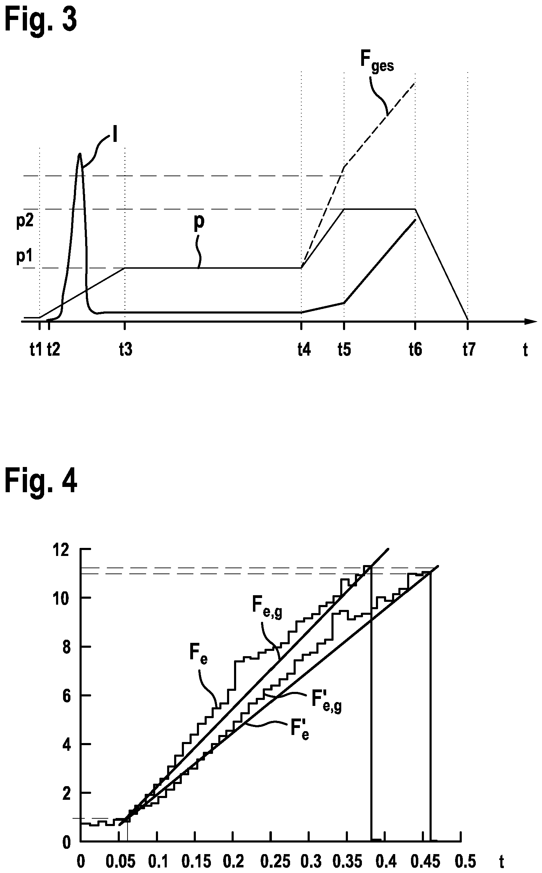

In Fig. 3 ist ein Diagramm mit elektrischen und hydraulischen Zustandsgrößen bei einem Zuspannvorgang zum Festsetzen des Fahrzeugs im Stillstand dargestellt. Zum Zeitpunkt t₁ wird über einen elektrisch steuerbaren Aktuator der hydraulischen Fahrzeugbremse ein hydraulischer Bremsdruck p erzeugt, beispielsweise über eine Betätigung der ESP-Pumpe. Zum Zeitpunkt t₃ erreicht der hydraulische Bremsdruck das erste Niveau p₁.

Zum Zeitpunkt t₂ beginnt die Bestromung des elektrischen Bremsmotors mit dem Motorstrom I, der nach einem Anfangsimpuls auf einen Leerlaufstromwert abfällt und diesen über den Zeitraum zwischen t₃ und t₄ beibehält. Der hydraulische Bremsdruck p erreicht zum Zeitpunkt t₃ einen Vordruckwert, der bis zum Zeitpunkt t₄ beibehalten wird; die Phase zwischen t₃ und t₄ stellt die Leerlaufphase des elektrischen Bremsmotors dar.

Zum Zeitpunkt t₄ wird über den elektrischen Bremsmotor eine elektromechanische Bremskraft erzeugt, entsprechend steigt der Motorstrom I ausgehend vom Niveau des Leerlaufstroms an. Auch der hydraulische Bremsdruck p steigt vom ersten Niveau p₁ ausgehend weiter an, so dass sich durch Überlagerung von hydraulischer und elektromechanischer Bremskraft eine Gesamt-Bremskraft F_{ges} einstellt. Zum Zeitpunkt t₅ erreicht der hydraulische Bremsdruck sein Maximum p₂, das bis zum Zeitpunkt t₆ beibehalten wird und anschließend bis zum Zeitpunkt t₇ wieder auf 0 abfällt. Im Zeitraum zwischen t₅ und t₆ steigt die elektromechanische Bremskraft, die synchron zum Bremsstrom I verläuft, bis zum Erreichen eines Maximums an.

In Fig. 4 ist der tatsächliche Verlauf des Motorstroms während des Bremskraftanstiegs mit und ohne hydraulischen Vordruck dargestellt; mit diesem Motorstrom korrespondiert die eingetragene elektromechanische Bremskraft Fₑ bzw. F'ₑ. Bei funktionstüchtiger hydraulischer Fahrzeugbremse stellt sich der tatsächliche Verlauf Fₑ der elektromechanischen Bremskraft ein, der gegenüber einem Verlauf F'ₑ, welcher den Verlauf bei einer Fehlfunktion der hydraulischen Fahrzeugbremse charakterisiert, einen steileren Gradienten aufweist. Die zugehörigen Gradienten sind mit F_{e,g} bzw. F'_{e,g} charakterisiert; die Gradienten werden durch den Anfangs- und Endpunkt des jeweiligen elektromechanischen Bremskraftanstieges Fₑ und F'ₑ gelegt. Zu erkennen ist, dass der Gradient F_{e,g}, der dem korrekten Bremskraftanstieg entspricht, steiler ist als der Gradient F'_{e,g}, der auf einen zu niedrigen hydraulischen Bremsdruck in der hydraulischen Fahrzeugbremse hinweist. Ein zu niedriger hydraulischer Bremsdruck in der Radbremseinrichtung entsteht beispielsweise bei einer abgeklemmten Hydraulikleitung.

Die hydraulische Fehlfunktion kann anhand des Gradienten F_{e,g} des Bremskraftanstiegs festgestellt werden. Bei einer Fehlfunktion liegt der kleinere Gradient F'_{e,g} vor, was anhand eines Vergleiches mit einem Referenzwert festgestellt werden kann.

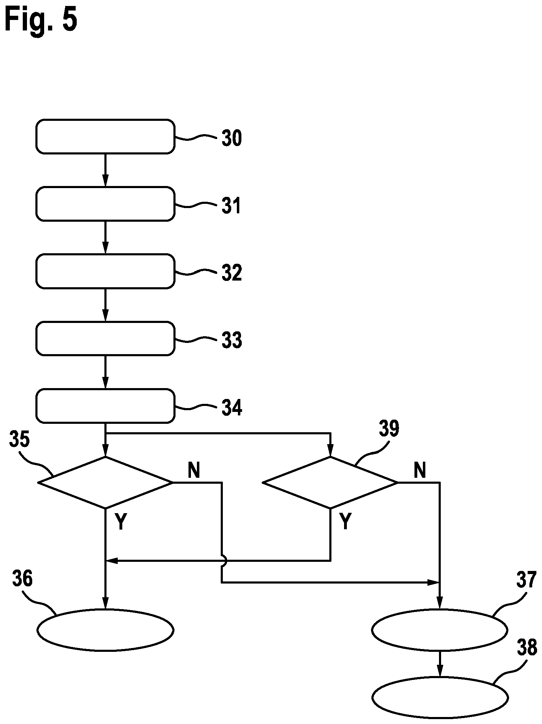

In Fig. 5 ist ein Ablaufschema zur Überwachung der Bremskraft dargestellt. Zunächst erfolgt im ersten Schritt 30 der Start eines Bremsvorganges zum Festsetzen des Fahrzeugs im Stillstand. Im Schritt 31 wird ein hydraulischer Bremsdruck zur Erzeugung einer hydraulischen Klemmkraft aufgebracht, indem ein Aktuator in der hydraulischen Fahrzeugbremse wie zum Beispiel die ESP-Pumpe aktiviert wird.

Zeitlich darauf folgend wird im nächsten Schritt 32 eine elektromechanische Klemmkraft durch Ansteuern des elektrischen Bremsmotors erzeugt. Im nächsten Schritt 33 wird der Klemmkraftanstieg Fₑ anhand des Motorstroms des Bremsmotors ermittelt, im Schritt 34 wird aus dem Bremskraftanstieg Fₑ bzw. des entsprechenden Stromverlaufes der Gradient F_{e,g} gebildet.

Im nächsten Schritt 35 erfolgt die Abfrage, ob der Gradient des elektromechanischen Bremskraftanstiegs bzw. des Motorstroms innerhalb eines zulässigen Wertebereichs liegt, was durch Vergleich mit einem Referenzwert ermittelt wird. Ist dies der Fall, wird der Ja-Verzweigung ("Y") folgend zum nächsten Schritt 36 vorgerückt, der Parkbremsvorgang ist ordnungsgemäß abgeschlossen.

Die Abfrage im Schritt 35, ob der Gradient des Bremskraftanstieges innerhalb des zulässigen Wertebereichs liegt, wird für sämtliche Radbremseinrichtungen durchgeführt, an denen auch eine elektromechanische Bremsvorrichtung mit Bremsmotor wirksam ist. Dies betrifft beispielsweise Radbremseinrichtungen links und rechts an der Hinterachse des Fahrzeugs.

Ergibt die Abfrage im Schritt 35, dass in mindestens einer Radbremseinrichtung mit elektrischem Bremsmotor ein unzureichender Gradient des elektromechanischen Bremskraftanstiegs vorliegt, wird der Nein-Verzweigung ("N") folgend zum Schritt 37 vorgerückt. In diesem Fall ist der Bremskraftaufbau zum Erzeugen einer Parkbremskraft fehlgeschlagen, und es wird im nächsten Schritt 38 ein Fehlersignal erzeugt. Gegebenenfalls kann über den Antriebsstrang das Fahrzeug gesichert werden, um ein unerwünschtes Wegrollen des Fahrzeugs zu verhindern.

Im Anschluss an den Schritt 34 erfolgt außerdem eine zusätzliche Abfrage im Schritt 39, bei der die Gradienten der elektromechanischen Bremskraftanstiege in mindestens zwei verschiedenen Radbremseinrichtungen miteinander verglichen werden, beispielsweise in den Radbremseinrichtungen links und rechts an der Hinterachse. Bei korrekter Funktion der hydraulischen Fahrzeugbremse müssen die Gradienten der Bremskraftanstiege bzw. die zugeordneten Motorströme zumindest annähernd gleich groß sein. Ergibt der Vergleich in Schritt 39, dass dies zutrifft, wird der Ja-Verzweigung folgend zum Schritt 36 vorgerückt, die Erzeugung der Parkbremskraft ist erfolgreich abgeschlossen.

Ergibt dagegen die Abfrage im Schritt 39, dass die Gradienten der Bremskraftanstiege in den unterschiedlichen Radbremseinrichtungen sich in einer unzulässigen Weise voneinander unterscheiden, wird der Nein-Verzweigung folgend zu den Schritten 37 und 38 vorgerückt und ein entsprechendes Fehlersignal erzeugt.

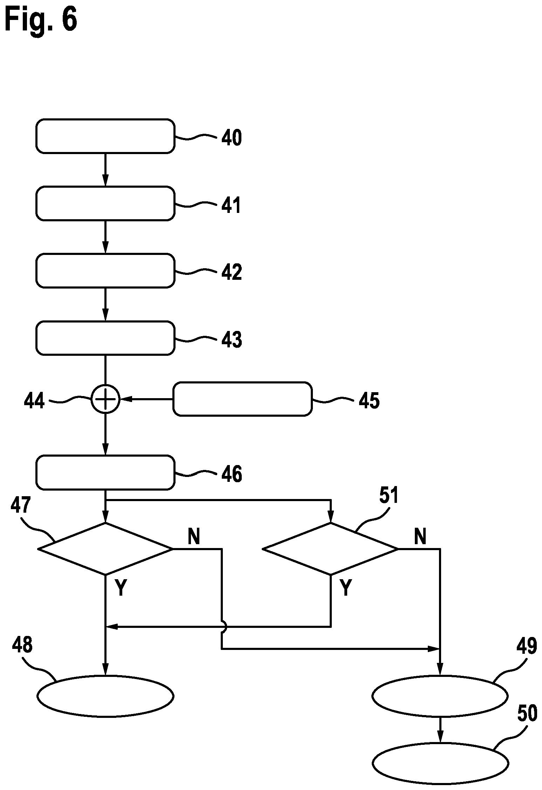

In Fig. 6 ist ein Ablaufschema zum Überprüfen und Überwachen der Bremskraft beim Durchführen eines Parkbremsvorganges dargestellt. Die ersten Schritte 40, 41 und 42 entsprechen den Schritten 30, 31 und 32 aus Fig. 5. Es wird nach dem Start des Klemm- bzw. Parkbremsvorgangs zunächst ein hydraulischer Bremsdruck erzeugt und anschließend durch Ansteuerung des elektrischen Bremsmotors eine elektromechanische Bremskraft.

Im Schritt 43 wird die aktuelle Bremssattelsteifigkeit ermittelt. Dies kann auf rechnerischem Wege unter Zugrundelegung aktueller System- und Kenngrößen durchgeführt werden, unter anderem des aktuellen hydraulischen Bremsdrucks und der Temperatur.

Im Schritt 44 wird zu der aktuellen Bremssattelsteifigkeit die Bremssattelsteifigkeit aus einem vorangegangenen Durchlauf 45 hinzuaddiert, wobei die Anteile gemittelt werden können. Entsprechend ergibt sich im Schritt 46 eine gemittelte aktuelle Bremssattelsteifigkeit. Dies wird im nächsten Schritt 47 mit einem Referenzwert verglichen, insbesondere mit der im vorangegangenen Zuspannvorgang ermittelten Bremssattelsteifigkeit. Der Vergleich erfolgt für sämtliche Radbremseinrichtungen, an denen eine elektromechanische Bremsvorrichtung angeordnet ist.

Ergibt die Überprüfung, dass die im Schritt 46 ermittelte, aktuelle Bremssattelsteifigkeit mit dem vorangegangenen Wert mit hinreichender Genauigkeit übereinstimmt, wird der Ja-Verzweigung folgend zum Schritt 48 vorgerückt, die Erzeugung der Parkbremskraft ist abgeschlossen.

Ergibt dagegen die Abfrage im Schritt 47, dass eine unzulässig große Abweichung in den Bremssattelsteifigkeiten vorliegt, wird der Nein-Verzweigung folgend zu den Schritten 49 und 50 vorgerückt und ein Fehlersignal generiert. Die Schritte 49 und 50 entsprechen den Schritten 37 und 38 aus Fig. 5.

Zusätzlich werden im Schritt 51, der sich ebenfalls unmittelbar an den Schritt 46 anschließt, die Bremssattelsteifigkeiten in den verschiedenen Radbremseinrichtungen miteinander verglichen. Stimmen diese mit hinreichender Genauigkeit überein, wird der Ja-Verzweigung folgend zum Schritt 48 vorgerückt, das Parkbremsverfahren ist erfolgreich abgeschlossen. Andernfalls wird der Nein-Verzweigung folgend zu den Schritten 49 und 50 vorgerückt und ein Fehlersignal erzeugt.

## Patentansprüche

1. Verfahren zum Überwachen der Bremskraft in einem Fahrzeug, dessen Bremssystem eine hydraulische Fahrzeugbremse (1) und mindestens eine elektromechanische Bremsvorrichtung mit einem elektrischen Bremsmotor (13) zur Erzeugung von Bremskraft umfasst, wobei der hydraulische Bremsdruck der hydraulischen Fahrzeugbremse (1) und der elektrische Bremsmotor (13) zeitgleich auf den gleichen Bremskolben (16) einer Radbremseinrichtung (9) wirken, wobei ein Fehlersignal erzeugt wird, das einen zu niedrigen hydraulischen Bremsdruck in der hydraulischen Fahrzeugbremse (1) repräsentiert, falls der Gradient des elektromechanischen Bremskraftanstiegs oder einer korrespondierenden Größe außerhalb eines zulässigen Wertebereichs liegt, **dadurch gekennzeichnet, dass** der elektromechanische Bremskraftanstieg oder eine korrespondierende Größe in zwei unterschiedlichen Radbremseinrichtungen (9) miteinander verglichen werden.

2. Verfahren nach Anspruch 1, **dadurch gekennzeichnet, dass** der Gradient aus den Anfangs- und Endpunkten des elektromechanischen Bremskraftanstiegs bzw. der korrespondierenden Größe gebildet wird.

3. Verfahren nach Anspruch 1 oder 2, **dadurch gekennzeichnet, dass** der zulässige Wertebereich empirisch bestimmt wird.

4. Verfahren nach einem der Ansprüche 1 bis 3, **dadurch gekennzeichnet, dass** ein den zulässigen Wertebereich kennzeichnender Referenzwert aus der Steifigkeit des Bremssattels (12) der Radbremseinrichtung (9) bestimmt wird.

5. Verfahren nach Anspruch 4, **dadurch gekennzeichnet, dass** die Steifigkeit des Bremssattels (12) bei jedem Bremsvorgang ermittelt und aktualisiert wird.

6. Verfahren nach einem der Ansprüche 1 bis 5, **dadurch gekennzeichnet, dass** die mit dem elektromechanischen Bremskraftanstieg korrespondierende Größe der Motorstrom (I) des elektrischen Bremsmotors (13) ist.

7. Verfahren nach einem der Ansprüche 1 bis 6, **dadurch gekennzeichnet, dass** die mit dem elektromechanischen Bremskraftanstieg korrespondierende Größe die Steifigkeit des Bremssattels (12) der Radbremseinrichtung (9) ist.

8. Verfahren nach einem der Ansprüche 1 bis 7, **dadurch gekennzeichnet, dass** bei der Bremskrafterzeugung der Beginn des Erzeugens von hydraulischem Bremsdruck zeitlich vor dem elektromechanischen Bremskraftanstieg liegt.

9. Regel- bzw. Steuergerät (12) zur Durchführung des Verfahrens nach einem der Ansprüche 1 bis 8.

10. Bremssystem in einem Fahrzeug, mit einer hydraulischen Fahrzeugbremse (1) und einer elektromechanischen Bremsvorrichtung mit einem elektrischen Bremsmotor, mit einem Regel- bzw. Steuergerät (12) nach Anspruch 9 zur Ansteuerung der einstellbaren Komponenten des Bremssystems.

11. Bremssystem nach Anspruch 10, **dadurch gekennzeichnet, dass** die hydraulische Fahrzeugbremse (1) mit einem elektrisch steuerbaren Aktuator zur Beeinflussung des Hydraulikdrucks, z.B. einer ESP-Pumpe ausgestattet ist.

## Claims

1. Method for monitoring the braking force in a vehicle, the braking system of which comprises a hydraulic vehicle brake (1) and at least one electromechanical braking device with an electric brake motor (13) for producing braking force, wherein the hydraulic braking pressure of the hydraulic vehicle brake (1) and the electric brake motor (13) act at the same time on the same brake piston (16) of a wheel braking device (9), wherein a fault signal is produced that represents too low a hydraulic braking pressure in the hydraulic vehicle brake (1) if the gradient of the electromechanical increase in braking force or a corresponding variable lies outside a permissible range of values, **characterized in that** the electromechanical increase in braking force or a corresponding variable in two different wheel braking devices (9) are compared with each other.

2. Method according to Claim 1, **characterized in that** the gradient is formed from the start and end points of the electromechanical increase in braking force or the corresponding variable.

3. Method according to Claim 1 or 2, **characterized in that** the permissible range of values is determined empirically.

4. Method according to any one of Claims 1 to 3, **characterized in that** a reference value characterizing the permissible range of values is determined from the stiffness of the brake caliper (12) of the wheel braking device (9).

5. Method according to Claim 4, **characterized in that** the stiffness of the brake caliper (12) is determined and updated during each braking process.

6. Method according to any one of Claims 1 to 5, **characterized in that** the variable corresponding to the electromechanical increase in braking force is the motor current (I) of the electric brake motor (13).

7. Method according to any one of Claims 1 to 6, **characterized in that** the variable corresponding to the electromechanical increase in braking force is the stiffness of the brake caliper (12) of the wheel braking device (9).

8. Method according to any one of Claims 1 to 7, **characterized in that** during the generation of a braking force, the start of generating a hydraulic braking pressure precedes the electromechanical increase in braking force.

9. Regulating unit or control unit (12) for carrying out the method according to any one of Claims 1 to 8.

10. Braking system in a vehicle, with a hydraulic vehicle brake (1) and an electromechanical braking device with an electric brake motor, with a regulating unit or control unit (12) according to Claim 9 for actuating the adjustable components of the braking system.

11. Braking system according to Claim 10, **characterized in that** the hydraulic vehicle brake (1) is equipped with an electrically controllable actuator for influencing the hydraulic pressure, for example an ESP pump.

## Revendications

1. Procédé de surveillance de la force de freinage dans un véhicule dont le système de freinage comporte un frein de véhicule hydraulique (1) et au moins un arrangement de freinage électromécanique avec un motofrein électrique (13) destiné à générer une force de freinage, la pression de freinage hydraulique du frein de véhicule hydraulique (1) et le motofrein électrique (13) agissant simultanément sur le même piston de frein (16) d'un dispositif de frein de roue (9), un signal de défaut étant généré, qui représente une pression de freinage hydraulique trop faible dans le frein de véhicule hydraulique (1) dans le cas où le gradient de l'accroissement de la force de freinage électromécanique ou une grandeur correspondante se trouve en-dehors d'une plage de valeurs admissible, **caractérisé en ce que** l'accroissement de la force de freinage électromécanique ou une grandeur correspondante dans deux dispositifs de frein de roue (9) différents sont comparés entre eux.

2. Procédé selon la revendication 1, **caractérisé en ce que** le gradient est formé à partir des points de début et de fin de l'accroissement de la force de freinage électromécanique ou de la grandeur correspondante.

3. Procédé selon la revendication 1 ou 2, **caractérisé en ce que** la plage de valeurs admissible est déterminée empiriquement.

4. Procédé selon l'une des revendications 1 à 3, **caractérisé en ce qu'**une valeur de référence qui caractérise la plage de valeurs admissible est déterminée à partir de la rigidité de l'étrier de frein (12) du dispositif de frein de roue (9).

5. Procédé selon la revendication 4, **caractérisé en ce que** la rigidité de l'étrier de frein (12) est identifiée et actualisée à chaque opération de freinage.

6. Procédé selon l'une des revendications 1 à 5, **caractérisé en ce que** la grandeur qui correspond à l'accroissement de la force de freinage électromécanique est le courant de moteur (I) du motofrein électrique (13).

7. Procédé selon l'une des revendications 1 à 6, **caractérisé en ce que** la grandeur qui correspond à l'accroissement de la force de freinage électromécanique est la rigidité de l'étrier de frein (12) du dispositif de frein de roue (9).

8. Procédé selon l'une des revendications 1 à 7, **caractérisé en ce que** lors de la génération de la force de freinage, le début de la génération de la pression de freinage hydraulique se trouve avant l'accroissement de la force de freinage électromécanique.

9. Régulateur ou contrôleur (12) destiné à mettre en œuvre le procédé selon l'une des revendications 1 à 8.

10. Système de freinage dans un véhicule, comprenant un frein de véhicule hydraulique (1) et un arrangement de freinage électromécanique avec un motofrein électrique, comprenant un régulateur ou contrôleur (12) selon la revendication 9 servant à commander les composants réglables du système de freinage.

11. Système de freinage selon la revendication 10, **caractérisé en ce que** le frein de véhicule hydraulique (1) est équipé d'un actionneur à commande électrique destiné à influencer la pression hydraulique, par exemple d'une pompe ESP.
